# EUROPEAN PATENT APPLICATION

(11) **EP 2 169 746 A1**
(43) Date of publication of application: **31.03.2010**
(21) Application number: 08765608.8
(22) Date of filing: 13.06.2008
(51) Int. Cl.: H01M 4/86, H01M 4/88, H01M 8/02, H01M 8/10

(54) **CATALYST INK, METHOD FOR PRODUCING CATALYST INK, METHOD FOR PRODUCING MEMBRANE-ELECTRODE ASSEMBLY, MEMBRANE-ELECTRODE ASSEMBLY PRODUCED BY THE METHOD, AND FUEL CELL**

(30) Priority: 15.06.2007 JP 2007159454
(71) Applicant: Sumitomo Chemical Company, Limited, Tokyo 104-8260 (JP)
(72) Inventor: SAKAI, Taiga, Tsukuba-shi Ibaraki 305-0821 (JP); YASHIRO, Arihiro, Tsukuba-shi Ibaraki 305-0045 (JP); SAITO, Shin, Tsukuba-shi Ibaraki 305-0822 (JP); KURODA, Ryuma, Komatsu-shi Ishikawa 932-0832 (JP)
(74) Representative: Vossius & Partner
(86) International application number: PCT/JP2008/060898
(87) International publication number: WO 2008/153148

(57) **Abstract**

It is an object of this invention to provide a catalyst ink which allows formation of catalyst layers that can adequately improve durability of fuel cells. The catalyst ink of the invention is a catalyst ink for formation of a fuel cell catalyst layer, comprising a catalyst substance, a solvent and an aromatic polymer compound having a phosphorus atom-containing functional group, wherein at least the aromatic polymer compound is dispersed, and not dissolved, in the solvent.

## Description

### Technical Field

The present invention relates to a catalyst ink, a method for producing a catalyst ink, a method for producing a membrane-electrode assembly, a membrane-electrode assembly produced by the method, and a fuel cell.

### Background Art

Fuel cells, and particularly solid polymer fuel cells employing polymer electrolytes as electrolytes, emit only water and are therefore expected to have applications in automobiles and the like, as energy sources with low environmental load. Solid polymer fuel cells generally have a construction with catalyst layers functioning as electrodes, gas diffusion layers, and separators arranged in that order on both sides of a polymer electrolyte membrane composed of a polymer with proton conductivity.

Fuel cells have conventionally been associated with susceptibility to polymer electrolyte membrane deterioration when operated for prolonged periods. One possible cause is that the catalyst layer adjacent to the polymer electrolyte membrane usually has a construction that includes a catalyst substance such as platinum and the same polymer electrolyte as the polymer electrolyte membrane, and such catalyst layers are prone to peroxide production due to the cell reaction, with the peroxides diffusing while forming peroxide radicals, and causing the polymer electrolyte membrane to undergo deterioration.

Various techniques for adding compounds with phosphorus-containing functional groups to the catalyst layer have been studied in order to prevent such deterioration of the polymer electrolyte membrane and improve the durability of solid polymer fuel cells. One such technique involves addition of a polymer electrolyte with phosphorus-containing functional groups introduced therein, into the electrode (catalyst layer). For example, Patent document 1 proposes a fuel cell electrode having polyvinylphosphonic acid combined with a fluorine-based polymer electrolyte, and Patent document 2 discloses a fuel cell electrode comprising phosphonated poly(4-phenoxybenzoyl 1,4-phenylene).
[Patent document 1] Japanese Unexamined Patent Publication No. 2004-134269
[Patent document 2] Japanese Unexamined Patent Publication No. 2004-175997

### Disclosure of the Invention

### Problems to be Solved by the Invention

However, even with these conventional methods it has still been difficult to adequately improve durability while maintaining practical electric power generation performance for fuel cells.

It is therefore an object of the present invention to provide a catalyst ink and a method for producing it, whereby it is possible to form catalyst layers with adequately improved durability while maintaining practical electric power generation performance for fuel cells. It is another object of the invention to provide a method for producing a membrane-electrode assembly using the catalyst ink, a membrane-electrode assembly produced by the method, and a fuel cell.

### Means for Solving the Problems

In order to achieve these objects, the catalyst ink of the invention is a catalyst ink for formation of a fuel cell catalyst layer, characterized by comprising a catalyst substance, a solvent and an aromatic polymer compound having a phosphorus atom-containing functional group, wherein at least the aromatic polymer compound is dispersed in the solvent. The term "catalyst ink" is a common term referring to a liquid composition used to form a catalyst layer in a fuel cell.

It is a feature of the catalyst ink of the invention that the aromatic polymer compound having a phosphorus atom-containing functional group (hereinafter also referred to as "phosphorus functional group") has a structure in which the main chain is formed mainly of an aromatic ring, with a phosphorus functional group bonded to the main chain or to a side chain bonded to the main chain, wherein at least a portion of the aromatic polymer compound is not dissolved in the solvent but rather is dispersed in the solvent, in a "emulsion" state. The present inventors have found that when a catalyst layer obtained using such a catalyst ink is used to assemble a solid polymer fuel cell, the resulting solid polymer fuel cell has adequately reduced deterioration of the polymer electrolyte membrane while maintaining practical electric power generation performance.

It is believed that when the catalyst layer is formed, the aromatic polymer compound with a phosphorus functional group in the catalyst ink of the invention prevents generation of peroxide radicals or scavenges peroxide radicals due to the phosphorus functional groups. Thus, a catalyst layer formed using a catalyst ink according to the invention is resistant to electrolyte membrane deterioration caused by peroxide radicals, and a fuel cell comprising the catalyst layer can exhibits sufficient durability. Because the aromatic polymer compound has excellent heat resistance, the catalyst layer containing it is highly resistant to heat deformation even at the operating temperature of the fuel cell.

The catalyst ink of the invention also preferably comprises a polymer electrolyte with a strongly acidic group. Since the catalyst layer obtained using the catalyst ink comprises a polymer electrolyte with a strongly acidic group, it has excellent ionic conductivity and further improves the operating efficiency of fuel cells and the like.

The solvent in the catalyst ink of the invention preferably contains water. Including water in the solvent will increase the dispersion stability of the phosphorus functional group-containing aromatic polymer compound in the catalyst ink. In addition, since only water is emitted after the catalyst layer has been formed, it is possible to reduce the environmental burden created when using the catalyst ink to form the catalyst layer.

The phosphorus functional group-containing aromatic polymer compound preferably comprises phosphonic acid group or a phosphonic acid ester group as the phosphorus functional group. Phosphonic acid group or phosphonic acid ester groups can more satisfactorily reduce deterioration of the electrolyte membrane by peroxide radicals generated in the catalyst layer.

Specifically preferred as such aromatic polymer compounds are compounds comprising a repeating structure represented by the following general formula (1). 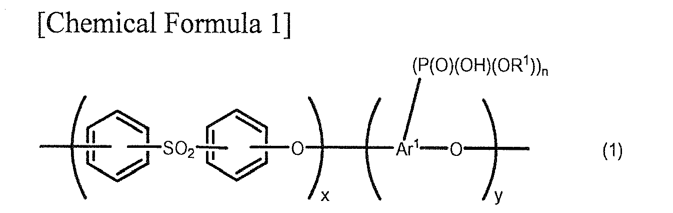 [ In the formula, Ar¹ represents an optionally substituted aromatic group. The letters x and y represent the copolymerization molar ratios of each structural unit (x+y = 1) which are 0.01-0.99, n is an integer from 1 to the number of substitutable sites of Ar¹, and R¹ is hydrogen or an alkyl group.]

The method for producing a catalyst ink according to the invention is a method whereby the catalyst ink of the invention described above can be suitably produced, and it is characterized by including a step of mixing a catalyst substance with a dispersion in which at least a portion of the aromatic polymer compounds with phosphorus atom-containing functional groups are dispersed in a solvent.

According to this production method, it is possible to satisfactorily obtain a catalyst ink in which the phosphorus functional group-containing aromatic polymer compound is present in a stably dispersed state in the solvent.

The method for production of a membrane-electrode assembly according to the invention is characterized by including a step of coating the catalyst ink of the invention onto the surface of a polymer electrolyte membrane to form a catalyst layer. This production method can satisfactorily yield a membrane-electrode assembly having a catalyst layer comprising a catalyst ink of the invention formed on a polymer electrolyte membrane.

In the method for producing a membrane-electrode assembly according to the invention, the polymer electrolyte membrane is preferably a hydrocarbon-based polymer electrolyte membrane. A hydrocarbon-based polymer electrolyte membrane can be obtained more inexpensively than a conventional fluorine-based polymer electrolyte membrane, and its heat resistance is also superior. Because hydrocarbon-based polymer electrolyte membranes generally have low radical resistance of the hydrocarbon backbone, they are prone to deterioration in fuel cells. However, a membrane-electrode assembly obtained by the production method of the invention which comprises a catalyst layer comprising a catalyst ink according to the invention can sufficiently prevent deterioration of the electrolyte membrane by peroxide radicals even when it employs a hydrocarbon-based polymer electrolyte membrane.

The invention further provides a fuel cell comprising a membrane-electrode assembly according to the invention. The fuel cell of the invention comprises a catalyst layer formed from a catalyst ink of the invention, and is therefore resistant to deterioration of the polymer electrolyte membrane by peroxide radicals and exhibits excellent durability. Especially when a hydrocarbon-based polymer electrolyte membrane is used in the polymer electrolyte membrane, it is possible to obtain a fuel cell with very excellent durability because the electrolyte membrane itself has high heat resistance and the electrolyte membrane is resistant to deterioration by peroxide radicals.

### Effect of the Invention

According to the invention it is possible to provide a catalyst ink and a method for producing it, whereby it is possible to form catalyst layers with adequately improved durability for fuel cells. It is also possible to provide a method for producing a membrane-electrode assembly using the catalyst ink of the invention, as well as a membrane-electrode assembly and a fuel cell with excellent durability, which are produced by the method.

### Brief Description of the Drawings

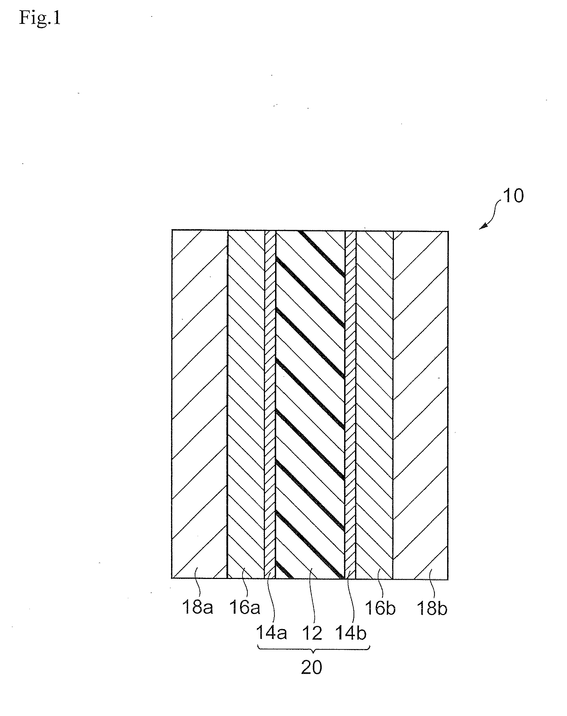

Fig. 1 is a schematic view of the cross-sectional structure of a fuel cell according to a preferred embodiment.

### Explanation of Symbols

10: Fuel cell, 12: polymer electrolyte membrane, 14a, 14b: catalyst layers, 16a, 16b: gas diffusion layers, 18a, 18b: separators, 20: MEA.

### Best Mode for Carrying Out the Invention

Preferred embodiments of the invention will now be explained in detail, with reference to the accompanying drawings as necessary.

### [Catalyst ink]

Preferred embodiments of the catalyst ink of the invention will now be explained.

A preferred embodiment of the catalyst ink comprises a catalyst substance, an aromatic polymer compound having a phosphorus atom-containing functional group (phosphorus functional group) and a solvent. Each of the components of the catalyst ink will now be explained.

### (Catalyst substance)

The catalyst substance may employ components that are commonly used as catalysts in fuel cell catalyst layers. As examples there may be mentioned platinum, platinum-containing alloys (platinum-ruthenium alloy, platinum-cobalt alloy and the like) and complex-based electrode catalysts (for example, (see "Fuel Cells and Polymers", edited by Research Group on Materials for Fuel Cells, The Society of Polymer Science, Japan, p.103-112, Kyoritsu Publishing, November 10, 2005). For easier transport of electrons in the catalyst layer, the catalyst substance is preferably one with a component that functions as the catalyst, such as any of the substances mentioned above, supported on the surface of a prescribed support. Preferred supports are those composed mainly of conducting materials, and there may be mentioned conductive carbon materials such as carbon black or carbon nanotubes, and ceramic materials such as titanium oxide.

### (Phosphorus functional group-containing aromatic polymer compound)

As mentioned above, the phosphorus functional group-containing aromatic polymer compound is a compound having a structure with a main chain formed primarily of an aromatic ring, and a phosphorus functional group bonded to the main chain or to a side chain bonded to the main chain.

The phosphorus functional group is a functional group comprising a trivalent or pentavalent phosphorus atom, and as a trivalent phosphorus atom-containing functional group there may be mentioned phosphine, while as pentavalent phosphorus atom-containing functional groups there may be mentioned phosphonic acid or phosphonic acid ester groups represented by the following general formula (3), and phosphoric acid or phosphoric acid ester groups represented by the following general formula (4). 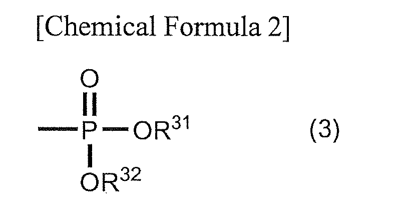 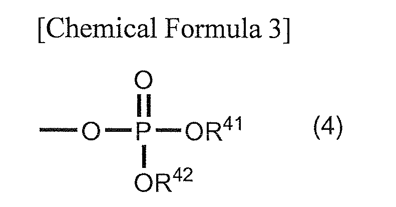 [In formulas (3) and (4), R³¹, R³², R⁴¹ and R⁴² each independently represent hydrogen or an alkyl group.]

The alkyl groups in formulas (3) and (4) are preferably lower alkyl groups, and specifically there may be mentioned C1-6 alkyl groups. Phosphonic acid and/or phosphonic acid ester groups are preferred among those mentioned above as phosphorus functional groups. When the phosphorus functional group is a phosphonic acid ester or phosphoric acid ester group, there are preferred phosphonic acid esters wherein one of R³¹ and R³² in formula (3) is hydrogen, and phosphoric acid ester groups wherein one of R⁴¹ and R⁴² in formula (4) is hydrogen. The phosphorus functional group-containing aromatic polymer compound may have a single phosphorus functional group or multiple phosphorus functional groups in the molecule.

Specific preferred phosphorus functional group-containing aromatic polymer compounds are those having a structural unit represented by the following general formula (5). 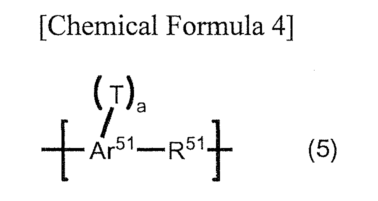 [In formula (5), T represents a functional group represented by general formula (3) or (4), Ar⁵¹ represents a divalent aromatic group optionally substituted with a group other than T, and R⁵¹ represents a direct bond, oxygen atom, sulfur atom, sulfonyl or carbonyl group. The letter n in the formula represents an integer from 1 to the number of substitutable sites of Ar⁵¹, and when n is 2 or greater the multiple T groups may be the same or different.]

The phosphorus functional group-containing aromatic polymer compound preferably further comprises a structural unit with no phosphorus functional group in addition to the structural unit represented by general formula (5) above. In this case, the copolymerization pattern of the structural unit represented by general formula (5) and the structural unit with no phosphorus functional group may be random copolymerization, alternating copolymerization, block copolymerization or graft copolymerization. As structural units with no phosphorus functional group there are preferred structural units that can impart thermostability to the aromatic polymer compound. When the aromatic polymer compound has a structural unit with excellent thermostability, the catalyst layer obtained from the catalyst ink containing it will also have excellent thermostability, which is advantageous for inhibiting generation of peroxide radicals or sequestering peroxide radicals when the operating temperature of the fuel cell increases.

The phosphorus functional group-containing aromatic polymer compound may further comprise a functional group with ionic conductivity (ionic conductive group). A catalyst ink containing such an aromatic polymer compound can form a catalyst layer with excellent ion conductivity, to allow production of a fuel cell capable of operating at higher efficiency.

Particularly preferred as such phosphorus functional group-containing aromatic polymer compounds are the aromatic phosphonic acids disclosed in Japanese Unexamined Patent Publication No. 2003-282096 by the present applicant, and more specifically aromatic polymer compounds represented by the following general formula (1).

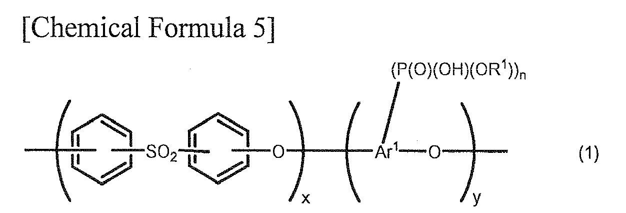

In formula (1), Ar¹ represents an optionally substituted aromatic group. The letters x and y represent the copolymerization molar ratios of the structural units in parentheses with respect to the total copolymer (x+y = 1), and they are each 0.01-0.99. Of these copolymerization molar ratios, x is preferably 0.60-0.90 and more preferably 0.70-0.90. The letter n is an integer from 1 to the number of substitutable sites of Ar¹, and it is preferably 1-3. R¹ is hydrogen or an alkyl group, and it is preferably hydrogen. There are no particular restrictions on the copolymerization pattern of the aromatic polymer compound represented by general formula (1) above, but from the viewpoint of facilitating production it is preferably random copolymerization or alternating copolymerization.

The phosphorus functional group-containing aromatic polymer compound represented by general formula (1) is more preferably a copolymer represented by the following general formula (2).

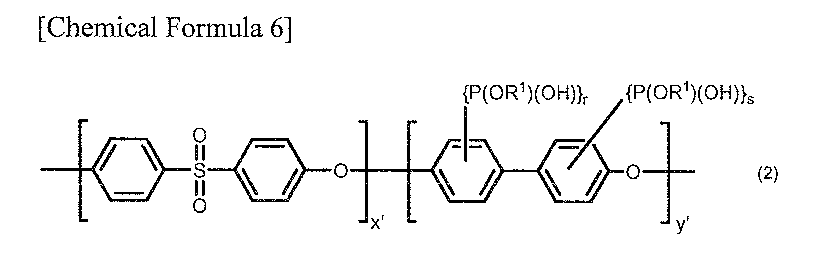

In this formula, R¹ has the same definition as above. The letters r and s are both integers of 0 or greater and no greater than the number of substitutable sites on the benzene ring, and r + s is at least 1. Also, x' and y' represent the copolymerization molar ratios of the structural units in parentheses (x'+y' = 1), and y' is preferably 0.50-0.95.

### (Solvent)

The solvent in the catalyst ink is one in which the phosphorus functional group-containing aromatic polymer compound is insoluble or poorly soluble, and it is preferably one that can cause formation of aggregates of the aromatic polymer compound on the nanometer to micrometer level and disperse the aggregates, and having a property to allow dissolution or dispersion of the other components in the catalyst ink. Such a solvent may consist of a single component, or a mixture of multiple solvents.

More specifically, when a fluorine-based polymer electrolyte such as Nafion is added to the catalyst ink as the polymer electrolyte described below, the solvent is preferably an aqueous dispersing medium containing at least water, it is more preferably a mixed solvent comprising water and an organic solvent, and it is even more preferably a mixed solvent comprising water and an alcohol.

### (Polymer electrolyte)

The catalyst ink preferably further comprises a polymer electrolyte in addition to the catalyst substance, the phosphorus functional group-containing aromatic polymer compound and the solvent. A catalyst layer obtained using a catalyst ink comprising a polymer electrolyte can more efficiently promote electrical reaction in the layer because of the polymer electrolyte as an ion conducting component. The electric power generation performance of a fuel cell comprising such a catalyst layer will therefore be further enhanced. The polymer electrolyte more preferably functions as a binder that can bind the catalyst substance.

The phosphorus functional group-containing aromatic polymer compound can also serve as a polymer electrolyte if the phosphorus functional group is an ionic conductive group such as phosphonic acid or it has an ionic conductive group other than the phosphorus functional group, and in such cases the added polymer electrolyte component is distinguished from the phosphorus functional group-containing aromatic polymer compound by having no phosphorus functional group. For this embodiment, it is more preferred to include in the catalyst ink a separate polymer electrolyte as an additional component, rather than the phosphorus functional group-containing aromatic polymer compound also serving as the polymer electrolyte, since this will further increase the ionic conductivity of the catalyst layer and thus still further enhance the electric power generation performance of the fuel cell.

Preferred polymer electrolytes are polymer electrolytes with strongly acidic groups. If the catalyst ink comprises a polymer electrolyte with a strongly acidic group, it will be possible to further increase the ionic conductivity of the catalyst layer. A strongly acidic group is an acidic group with an acid dissociation constant pKa of no greater than 2. As specific strongly acidic groups there may be mentioned sulfonic acid (-SO₃H) and sulfonylimide (-SO₂NHSO₂-). Also preferred as strongly acidic groups are ultrastrong acidic groups with even higher acidity due to the electron-accepting effect of fluorine atoms in these strongly acidic groups. As examples of such ultrastrong acidic groups there may be mentioned -Rf¹-SO₃H (where Rf¹ represents alkylene wherein all or a portion of the hydrogens have been replaced with fluorine atoms, or arylene wherein all or a portion of the hydrogens have been replaced with fluorine atoms), -SO₂NHSO₂-Rf² (where Rf² represents alkyl wherein all or a portion of the hydrogens have been replaced with fluorine atoms, or aryl wherein all or a portion of the hydrogens have been replaced with fluorine atoms). Sulfonic acid groups are preferred as strongly acidic groups.

As specific examples of the aforementioned polymer electrolytes there may be mentioned polymer electrolytes represented by the following (A)-(F). Specifically, first there may be mentioned (A) polymer electrolytes having a sulfonic acid group introduced into a hydrocarbon-based polymer whose main chain comprises an aliphatic hydrocarbon, (B) polymer electrolytes having a sulfonic acid group introduced into a polymer whose main chain comprises an aliphatic hydrocarbon and wherein at least a portion of the hydrogens on the main chain are replaced with fluorine atoms, and (C) polymer electrolytes having a sulfonic acid group introduced into a polymer with an aromatic ring on the main chain.

There may also be mentioned (D) polymer electrolytes having a sulfonic acid group introduced into a polymer whose main chain comprises an aliphatic hydrocarbon and an inorganic unit structure such as a siloxane group or phosphazene group, (E) polymer electrolytes having a sulfonic acid group introduced into a copolymer with a combination of two or more repeating units composing the main chain of a polymer electrolyte of (A)-(D), and (F) polymer electrolytes having an acidic compound such as sulfuric acid or phosphoric acid introduced by ionic bonding into a hydrocarbon-based polymer containing a nitrogen atom on the main chain or a side chain.

More specifically, as polymer electrolytes of (A) there may be mentioned polyvinylsulfonic acid, polystyrenesulfonic acid and poly(α-methylstyrene)sulfonic acid.

As polymer electrolytes of (B) there may be mentioned Nation (registered trademark of Dupont Corp.), Aciplex (registered trademark of Asahi Kasei Corp.), and Flemion registered trademark of Asahi Glass Co., Ltd.). There may also be mentioned sulfonic acid-type polystyrene-graft-ethylene-tetrafluoroethylene copolymer (ETFE) composed of a main chain produced by copolymerization between a fluorine-based vinyl carbide monomer and a hydrocarbon-based vinyl monomer, and hydrocarbon-based side chains with sulfonic acid groups, which is described in Japanese Unexamined Patent Publication HEI No. 9-102322, and sulfonic acid-type poly(trifluorostyrene)-graft-ETFE membranes obtained by graft polymerization of α,β,β-trifluorostyrene onto a membrane produced by copolymerization between a fluorine-based vinyl carbide monomer and a hydrocarbon-based vinyl monomer and introduction of sulfonic acid groups to produce a solid polymer electrolyte membrane, which are described in USP 4,012,303 and USP 4,605,685.

The polymer electrolytes of (C) may contain heteroatoms such as oxygen atoms on the main chain. As examples of such polymer electrolytes there may be mentioned homopolymers of polyetheretherketone, polysulfone, polyethersulfone, poly(arylene ether), polyimide, poly((4-phenoxybenzoyl)-1,4-phenylene), polyphenylene sulfide and polyphenylquinoxalene, having sulfonic acid groups introduced therein. Specifically, there may be mentioned sulfoarylated polybenzimidazoles and sulfoalkylated polybenzimidazoles.

As examples of polymer electrolytes (D) above there may be mentioned those obtained by introducing sulfonic acid groups into polyphosphazene. Such compounds can be easily produced according to Polymer Prep., 41, No.1, 70(2000).

The polymer electrolytes of (E) may be random copolymers with sulfonic acid groups introduced therein, alternating copolymers with sulfonic acid groups introduced therein, or block copolymers with sulfonic acid groups introduced therein. As examples of random copolymers with sulfonic acid groups introduced therein there may be mentioned the sulfonated polyethersulfone polymers mentioned in Japanese Unexamined Patent Publication HEI No. 11-116679. As block copolymers with sulfonic acid groups introduced therein there may be mentioned those having blocks comprising sulfonic acid groups, such as described in Japanese Unexamined Patent Publication No. 2001-250567.

As examples of polymer electrolytes of (F) above there may be mentioned phosphoric acid-containing polybenzimidazoles, such as those mentioned in Japanese Patent Public Inspection HEI No. 11-503262.

Preferred among these polymer electrolytes are fluorine-based polymer electrolytes and hydrocarbon-based polymer electrolytes. Preferred fluorine-based polymer electrolytes are Nafion^{R} and Flemion^{R}. Either aliphatic polymer electrolytes or aromatic polymer electrolytes may be used as hydrocarbon-based polymer electrolytes. Aromatic polymer electrolytes are preferred as polymer electrolytes to be used in the catalyst ink, because they exhibit high heat resistance, are easily recyclable and can provide excellent electric power generation performance and durability for fuel cells.

The polymer electrolyte content is selected in a range that permits ion conductivity in the catalyst layer. For example, when a catalyst component supported on a support is used as the catalyst substance, the polymer electrolyte content is preferably 0.05-1.4, more preferably 0.10-1.2 and even more preferably 0.15-1.0 with respect to the weight of the support.

### (Other components)

The catalyst ink may also contain components other than those mentioned above, according to the desired properties and in ranges that do not poison the catalyst when the catalyst layer is formed. As such other components there may be mentioned additives such as plasticizers, stabilizers, bonding aids, release agents, humectants, inorganic and organic particles, sensitizing agents, leveling agents, coloring agents and the like, that are ordinarily used in polymers. A known method such as cyclic voltammetry can be used to determine whether or not these components will poison the catalyst.

### [Method for producing catalyst ink]

A method for producing a catalyst ink comprising the components mentioned above will now be described. A method for producing a catalyst ink that comprises at least a catalyst substance, a solvent, a phosphorus functional group-containing aromatic polymer compound and a polymer electrolyte will be described here. For production of the catalyst ink, first an emulsion is prepared comprising the phosphorus functional group-containing aromatic polymer compound dispersed in a solvent together with the catalyst substance and polymer electrolyte (this will hereinafter be referred to as "aromatic polymer emulsion").

The aromatic polymer emulsion can be obtained by dispersing the phosphorus functional group-containing aromatic polymer compound (also abbreviated as "aromatic polymer compound") in a solvent that does not dissolve it (dispersing medium). The dispersing medium used in the emulsion may be water, a lower alcohol such as methanol or ethanol, a non-polar organic solvent such as hexane or toluene, or a mixture thereof. From the viewpoint of reducing environmental load, water or a solvent composed mainly of water is preferred.

The method for producing the aromatic polymer emulsion is preferably the following method, for example. First, a solution of the aromatic polymer compound dissolved in a solvent (a good solvent that can dissolve the aromatic polymer compound) is prepared, and then this is highly diluted with a separate dispersing medium (a poor solvent that does not dissolve the aromatic polymer compound). Next, the good solvent in the obtained dispersion of the aromatic polymer compound is replaced with the poor solvent using a dialysis membrane. The dispersion of the aromatic polymer compound is then concentrated using an evaporator or the like. This can yield an aromatic polymer emulsion with the desired concentration, having the aromatic polymer compound satisfactorily dispersed. "Good solvent" and "poor solvent" as used herein are solvents with the following definitions. Specifically, a good solvent is one that can dissolve at least 0.1 g and a poor solvent is one that can only dissolve up to 0.05 g of the aromatic polymer compound in 100 g of solvent.

It is especially important for the method for producing an aromatic polymer emulsion to include a step of highly diluting the aromatic polymer compound solution with a dispersing medium (poor solvent). Such a step can yield an aromatic polymer emulsion that satisfactorily disperses the aromatic polymer compound. If this step is not carried out, the aromatic polymer compound will dissolve or the aromatic polymer compound will precipitate due to gelling, making it difficult to produce a satisfactory aromatic polymer emulsion.

There are no particular restrictions on the method of diluting the aromatic polymer compound solution with the dispersing medium (poor solvent), and there may be mentioned a method of dropping the aromatic polymer compound solution into the dispersing medium using a buret or the like and a method of dropping the dispersing medium into the aromatic polymer compound solution using a buret or the like. The former method is more preferred because it is simple and allows formation of a satisfactory aromatic polymer emulsion.

The aromatic polymer compound concentration in the aromatic polymer emulsion is preferably 0.1-10 wt%, more preferably 0.5-5 wt% and even more preferably 1-2 wt%. At smaller concentrations, a large amount of solvent will be necessary to form the catalyst layer, and production efficiency for the catalyst layer will tend to be reduced. At higher concentrations, on the other hand, formation of the catalyst layer may be rendered difficult.

For production of the catalyst ink, the catalyst substance, polymer electrolyte and aromatic polymer emulsion are mixed. The method used for mixing may be one wherein the polymer electrolyte is first dissolved or dispersed in the solvent and the catalyst substance is added to the obtained solution or dispersion, and then the aromatic polymer emulsion is further added. If necessary, additional catalyst may be added to adjust the concentration of the polymer electrolyte for improved dispersibility. If the polymer electrolyte is soluble in the good solvent for the aromatic polymer compound, it will be possible to produce a mixture of the aromatic polymer emulsion and polymer electrolyte at one time during production of the aromatic polymer emulsion, by dissolving the aromatic polymer compound in the good solvent while simultaneously dissolving the polymer electrolyte, and diluting the obtained solution in the poor solvent. A catalyst ink can be obtained by adding the catalyst substance to the mixture obtained in this manner. During production of the catalyst ink, an ultrasonic disperser, homogenizer, ball mill, planetary ball mill, sand mill or the like may be used to maintain satisfactory dispersion stability of the aromatic polymer compound.

The aromatic polymer compound content in the catalyst ink is preferably 1-50 wt% and more preferably 2-30 wt% with respect to the polymer electrolyte, so that sufficient ionic conductivity is exhibited when the catalyst layer has been formed. The amount of aromatic polymer emulsion added in the production method described above is preferably adjusted so that the aromatic polymer compound content satisfies this condition.

The method described above can yield a catalyst ink comprising the catalyst substance, polymer electrolyte, aromatic polymer compound and solvent, with at least a portion of the aromatic polymer compound dispersed in the solvent.

### [Fuel cell]

A fuel cell according to a preferred embodiment, and a method for producing it, will now be explained.

Fig. 1 is a schematic view of the cross-sectional structure of a fuel cell according to a preferred embodiment. As shown in this drawing, the fuel cell 10 has a polymer electrolyte membrane 12 (proton conductive film) comprising a polymer electrolyte membrane, sandwiched on both sides by catalyst layers 14a, 14b, gas diffusion layers 16a, 16b and separators 18a, 18b, formed in that order. The polymer electrolyte membrane 12 and the pair of catalyst layers 14a, 14b sandwiching it form a membrane-electrode assembly (hereinafter abbreviated as "MEA") 20.

The polymer electrolyte membrane 12 in the fuel cell 10 will be explained in detail first.

The polymer electrolyte membrane 12 is a polymer electrolyte formed into a membrane, and the polymer electrolyte used may be a polymer electrolyte with acidic groups or a polymer electrolyte with basic groups. Using a polymer electrolyte with acidic groups is preferred because this will tend to yield a fuel cell with excellent electric power generation performance. As examples of acidic groups there may be mentioned sulfonic acid, carboxyl, phosphonic acid, phosphinic acid, sulfonylimide (-SO₂NHSO₂-), phenolic hydroxyl, and the aforementioned ultrastrong acid groups. Preferred among these as acidic groups are sulfonic acid and phosphonic acid groups, with sulfonic acid groups being especially preferred.

As specific examples of such polymer electrolytes there may be mentioned the polymer electrolytes of (A)-(F) above. Hydrocarbon-based polymer electrolytes are preferred from the standpoint of recycling properties and cost. The term "hydrocarbon-based polymer electrolyte" refers to a polymer electrolyte with a main chain composed primarily of a hydrocarbon, having, for example, a halogen atom content including fluorine atoms of no greater than 15 wt% as the compositional ratio by elemental weight. From the viewpoint of achieving both high electric power generation performance and durability, the polymer electrolytes of (C) or (E) above are preferred.

Particularly preferred among the polymer electrolytes mentioned above are aromatic-based polymer electrolytes, from the viewpoint of heat resistance and easier recycling. An aromatic-based polymer electrolyte is a polymer compound having a structure with an aromatic ring on the main chain and an acidic group in the molecule. The aromatic-based polymer electrolyte is usually preferred to be one that is soluble in solvents, so as to easily form a polymer electrolyte membrane of the desired film thickness by a known solution casting method. The acidic groups of such aromatic-based polymer electrolytes may be directly substituted on the aromatic ring on the main chain of the polymer, or they may be bonded to the aromatic ring on the main chain via a prescribed linking group, or a combination of the foregoing may be used.

The phrase "polymer having an aromatic ring on the main chain" refers to, for example, a polymer having divalent aromatic groups such as polyarylene groups linked to form the main chain, or a compound having divalent aromatic groups linked via other divalent groups to form the main chain. In the latter case, the divalent groups linking the aromatic groups may be ether, thioether, carbonyl, sulfinyl, sulfonyl, amide, ester, carbonic acid ester, approximately C1-4 alkylene, approximately C1-4 fluorine-substituted alkylene, approximately C2-4 alkenylene or approximately C2-4 alkynylene groups.

As divalent aromatic groups on the main chain there may be mentioned hydrocarbon aromatic groups such as phenylene, naphthalene, anthracenylene and fluorenediyl, and aromatic heterocyclic groups such as pyridinediyl, furanediyl, thiophenediyl, imidazolyl, indolediyl and quinoxalinediyl. The divalent aromatic groups may also have substituents other than these acidic groups. As substituents there may be mentioned C1-20 alkyl, C1-20 alkoxy, C6-20 aryl, C6-20 aryloxy, nitro, halogen atoms and the like. When the aromatic-based polymer electrolyte has a halogen atom as a substituent, or when it has a fluorine-substituted alkylene group as the divalent group linking the aromatic groups, the halogen atom content is preferably no greater than 15 wt% as the compositional ratio by elemental weight.

Preferred aromatic-based polymer electrolytes are those that form polymer electrolyte membranes having both a domain with an acidic group and a domain with essentially no ion-exchange groups, with phase separation and preferably microphase separation. The former domains contribute to proton conductivity, while the latter domains contribute to mechanical strength. A microphase separation structure, as referred to here, is a structure composed of a mixture of a microphase (microdomain) wherein the density of blocks with acidic groups is higher than the density of blocks with essentially no ion-exchange groups, and a microphase (microdomain) wherein the density of blocks with essentially no ion-exchange groups is higher than the density of blocks with acidic groups, as observed under a transmission electron microscope (TEM), and the domain width of each microdomain structure (the identity period), is between several nm and several 100 nm. Preferred aromatic-based polymer electrolytes are those that can form membranes with microdomain structures having domain widths of 5 nm-100 nm.

As aromatic-based polymer electrolytes that easily form membranes with such microphase separation structures, there may be mentioned block copolymers or graft copolymers comprising both a block with acidic groups (ion-exchange groups) and a block with essentially no ion-exchange groups. These form satisfactory membranes with microphase separation structures because their different polymer blocks are bonded by chemical bonds, thus readily causing microscopic phase separation on the order of the molecular chain size. Block copolymers are preferably used among those mentioned above.

The "block with ion-exchange groups" in the block copolymer is a block having an average of at least 0.5 ion-exchange groups for each repeating unit composing the block, and it more preferably a block with an average of at least 1.0 group for each repeating unit. On the other hand, the "block with essentially no ion-exchange groups" is a segment with an average of less than 0.5 ion-exchange groups for each repeating unit composing the block, and more preferably an average of no greater than 0.1 and even more preferably an average of no greater than 0.05 for each repeating unit.

As examples of preferred block copolymers for the polymer electrolyte membrane 12 there may be mentioned block copolymers having the aromatic polyether structures described in Japanese Unexamined Patent Publication No. 2005-126684 and Japanese Unexamined Patent Publication No. 2005-139432, comprising a block with ion-exchange groups and a block with essentially no ion-exchange groups. Block copolymers comprising a polyarylene block with acidic groups (see International Patent Publication No. WO2006/95919 by the present applicant) are preferred because they can form electrolyte membranes with high levels of both ionic conductivity and water resistance.

The optimal range for the molecular weight of the polymer electrolyte composing the polymer electrolyte membrane 12 is preferably determined as appropriate for the structure, and for example, the number-average molecular weight based on polystyrene is preferably 1000-1,000,000, according to GPC (gel permeation chromatography). The lower limit for the number-average molecular weight is more preferably 5000 or greater and even more preferably 10,000 or greater. The upper limit is more preferably no greater than 500,000 and even more preferably no greater than 300,000.

In addition to these polymer electrolytes, the polymer electrolyte membrane 12 may further comprise other components in ranges that do not notably lower the proton conductivity, according to the desired properties. As such other components there may be mentioned additives such as plasticizers, stabilizers, release agents and humectants that are ordinarily added to polymers. For improved mechanical strength of the polymer electrolyte membrane 12, a composite membrane obtained by compositing the polymer electrolyte with a prescribed support may be used. The support may be a base material with a fibril form or porous membrane form.

A fuel cell according to a preferred embodiment will now be explained, again with reference to Fig. 1.

The catalyst layers 14a, 14b adjacent to the polymer electrolyte membrane 12 are layers that essentially function as electrode layers for the fuel cell, with one as the anode layer and the other as the cathode layer. The catalyst layers 14a, 14b are layers formed using a catalyst ink according to the embodiment described above, and they comprise at least a catalyst substance, a polymer electrolyte and a phosphorus functional group-containing aromatic polymer compound. More specifically, they have a structure wherein the catalyst substance is bound by the polymer electrolyte and the phosphorus functional group-containing aromatic polymer compound.

The gas diffusion layers 16a, 16b are formed sandwiching the MEA 20 on either side, and they promote diffusion of source gas to the catalyst layers 14a, 14b. The gas diffusion layers 16a, 16b are preferably composed of porous materials with electrical conductivity. For example, porous carbon nonwoven fabric or carbon paper is preferably used to allow efficient transport of source gas into the catalyst layers 14a, 14b. A membrane-electrode-gas diffusion layer assembly (MEGA) is constructed from the polymer electrolyte membrane 12, catalyst layers 14a, 14b and gas diffusion layers 16a, 16b.

The separators 18a, 18b are formed of materials with electrical conductivity, and as examples of such materials there may be mentioned carbon, resin mold carbon, titanium, stainless steel and the like. While not shown, the separators 18a, 18b have grooves as fluid channels for fuel gas and the like formed on their catalyst layer 14a, 14b sides.

The fuel cell 10 may have a structure as described above that is sealed by a gas sealant (not shown). A plurality of fuel cells 10 having this structure can be connected in series to provide a practical fuel cell stack. When the fuel is hydrogen, the fuel cell having such a structure can operate as a solid polymer fuel cell, and when the fuel is aqueous methanol it can operate as a direct methanol-type fuel cell.

### [Method for producing fuel cell]

An example of a method for producing a fuel cell 10 having the structure described above will now be explained.

In the method for producing the fuel cell 10, a catalyst ink is used to form the catalyst layers 14a, 14b by any of various methods. The method of forming the catalyst layers 14a, 14b may be, for example, the following methods (a)-(c). First, in method (a), a catalyst ink is coated onto the polymer electrolyte membrane 12 and then dried to remove the solvent and form the catalyst layers 14a, 14b. This method can yield an MEA 20 having catalyst layers 14a, 14b formed on either side of the polymer electrolyte membrane 12.

In method (b), a catalyst ink is coated onto a support base such as a poly(tetrafluoroethylene) film or polyimide film and then dried to remove the solvent, to obtain a laminated body with catalyst layers formed on the support base. After being prepared for both catalyst layers 14a, 14b, they are placed on either side of the polymer electrolyte membrane 12 with the catalyst layers in contact with the polymer electrolyte membrane 12, and are bonded by a method such as pressing. The support base alone is then released to obtain an MEA 20 having catalyst layers 14a, 14b formed on both sides of the polymer electrolyte membrane 12.

In method (c), bases such as carbon paper are used as the support bases in method (b), to form the gas diffusion layers 16a, 16b. After forming a laminated body with catalyst layers formed on support bases (gas diffusion layers) in the same manner as above, these are situated with their respective catalyst layers in contact with the polymer electrolyte membrane 12 and bonded by pressing. The support bases are allowed to remain, unlike in method (b), to obtain a MEGA having catalyst layers 14a, 14b and gas diffusion layers 16a, 16b situated in that order on either side of the polymer electrolyte membrane 12.

The method for coating the catalyst ink in methods (a)-(c) described above may be a known coating method employing a die coater, or screen printing, spraying, an ink-jet method or the like. The solvent may be removed from the catalyst ink by any of these methods to form catalyst layers 14a, 14b comprising a catalyst substance, a polymer electrolyte and a phosphorus functional group-containing aromatic polymer compound.

Method (a) is particularly preferred among methods (a)-(c) because it will tend to strengthen adhesion between the polymer electrolyte membrane 12 and the catalyst layers 14a, 14b in the obtained MEA 20. Using this method, therefore, it will be easier to obtain a fuel cell 10 exhibiting very excellent electric power generation performance.

For production of the fuel cell 10, the materials for formation of the gas diffusion layers 16a, 16b or separators 18a, 18b are properly placed on both sides of the MEA 20 or MEGA obtained in the manner described above, and then each layer is bonded to obtain a fuel cell 10 having the construction described above.

The catalyst layers 14a, 14b produced using catalyst ink as explained above must contain appropriate amounts of the catalyst substance per unit area (especially the component that will function as essentially as the catalyst in the catalyst substance), in order to obtain the desired characteristics for the fuel cell 10. It is therefore important to determine the content of the catalyst per unit area in the catalyst layers 14a, 14b (the component that will function essentially as the catalyst) during production of the fuel cell 10. The method for determining the amount of catalyst substance in a catalyst layer will now be explained, based on an example of using platinum as the catalyst substance.

For the amount of platinum in the catalyst layer, first the amount of platinum in the catalyst ink is determined and the amount of platinum is calculated from the amount of coated catalyst ink. The value for the amount of platinum is divided by the area of the formed catalyst layer to determine the amount of platinum per unit area.

For another method, first the amount of platinum in the solid portion (for example, the platinum, polymer electrolyte and phosphorus functional group-containing aromatic polymer compound) of the catalyst ink is determined beforehand. The weight of the base on which the catalyst ink is to be coated (the polymer electrolyte membrane 12 or the support base on which the catalyst ink is to be coated) is also determined beforehand. After the catalyst layer has been formed on the base using the catalyst ink, the weight of the obtained laminated body is measured. The weight of the catalyst layer is obtained by subtracting the weight of the base from the weight of the laminated body. The weight of platinum in the catalyst layer is calculated from the weight of the obtained catalyst layer and the weight of platinum in the solid portion of the catalyst ink determined as explained above. This weight is divided by the area of the catalyst layer to determine the amount of platinum per unit area.

When the catalyst substance contains other components in addition to the component that functions essentially as a catalyst, such as platinum-containing alloys, for example, the amount of platinum in the catalyst layer can be determined by calculating the ratio of platinum in the catalyst substance beforehand.

When the amount of platinum is to be determined from the catalyst layer 14a, 14b after it has been formed, the following method may be used. Specifically, the catalyst layers 14a, 14b may be released with a cutter or the like and the released catalyst layers 14a, 14b analyzed by ICP (inductively-coupled plasma)-MS to determine the amount of platinum in the catalyst layer. When analysis is conducted using ICP-MS, the released catalyst layer may be heated in concentrated sulfuric acid at about 80-150°C to oxidize the platinum, in order to calculate the amount of platinum alone from the results.

The catalyst layers 14a, 14b in the fuel cell 10 having such a construction are formed by a catalyst ink according to the embodiment described above. Since the catalyst layers 14a, 14b each contain a phosphorus functional group-containing aromatic polymer compound, it is possible to satisfactorily stabilize peroxide radicals that are generated in the catalyst layer during operation of the fuel cell. A fuel cell comprising such catalyst layers 14a, 14b is therefore resistant to deterioration of the polymer electrolyte membrane 12 by peroxide radicals, and exhibits excellent durability.

In addition, since the catalyst ink is formed using an aromatic polymer emulsion and at least a portion of the phosphorus functional group-containing aromatic polymer compound is present in a dispersed state without being dissolved, it is possible to form the catalyst layers 14a, 14b with the aromatic polymer compound dispersed in the catalyst ink, so that the catalytic activities of the catalyst substances are not reduced. The reason for this effect is not thoroughly understood, but the present inventors offer the following conjecture. That is, the catalyst layers (fuel cell electrodes) disclosed in Patent documents 1 and 2 are obtained using catalyst inks wherein the polymer electrolytes with phosphorus-containing functional groups introduced therein are dissolved in solvents during the production process. A catalyst layer produced using such a catalyst ink is susceptible to lowering of the catalytic activity of the catalyst substance, and it has therefore been difficult to form fuel cells with practical electric power generation performance. In contrast, the catalyst layers 14a, 14b produced using catalyst inks according to the invention maintain excellent catalytic activity (electric power generation performance) while exhibiting satisfactory radical stabilization due to the phosphorus functional group-containing aromatic polymer compounds, and can therefore be used to form fuel cells with superior durability. Since a catalyst ink of the invention contains a phosphorus functional group-containing aromatic polymer compound in a dispersed state, it allows a greater freedom of selection among a wide range of compounds, including aromatic polymer compounds that are poorly soluble in solvents.

The catalyst ink and method for producing it, the membrane-electrode assembly and the fuel cell of the invention are not limited to the embodiments described above, and may incorporate appropriate modifications so long as the gist of the invention is maintained.

For example, both of the catalyst layers 14a, 14b were formed of catalyst inks of the invention in the fuel cell 10 for the embodiment described above, but this is not limitative, and it is sufficient if only one of them is formed of a catalyst ink of the invention. The fuel cell 10 may also have an abbreviated structure that still allows it to function as a fuel cell, or be provided with a different structure so long as it has a catalyst layer obtained using a catalyst ink according to the invention.

### Examples

The present invention will now be explained in greater detail through the following examples, with the understanding that these examples are in no way limitative on the invention.

### [Method of molecular weight measurement]

The molecular weights of the polymers produced in the following examples are all weight-average molecular weights (Mw) and number-average molecular weights (Mn) measured by the following methods. Specifically, each polymer was used for measurement in gel permeation chromatography (GPC) under the following conditions, and the weight-average molecular weight (Mw) and number-average molecular weight (Mn) based on polystyrene were calculated.

### GPC conditions

· Column: 1 TSKgel GMHHHR-M by Tosoh Corp.
· Column temperature: 40°C
· Mobile phase solvent: N,N-dimethylformamide (containing 10 mmol/dm³ LiBr)
· Solvent flow rate: 0.5 mL/min

### [Mean particle size measurement method]

In the following experiments, the mean particle sizes of the dispersions in the emulsions were all measured by dynamic light scattering (FPAR-1000 fiber-optics particle size analyzer by Otsuka Electronics Co., Ltd.). The measuring temperature was 30°C, the elapsed time was 30 minutes and the laser wavelength used was 660 nm. The obtained data were analyzed by the CONTIN method, using analysis software (FPAR System, Version 5.1.7.2) included with the apparatus, to obtain a scattering intensity distribution, and the particle size with the highest frequency was recorded as the mean particle size.

### [Production of phosphorus functional group-containing aromatic polymer compound]

### (Synthesis of polymer "a")

A 2 L separable flask equipped with a reduced pressure azeotropic distillation apparatus was substituted with nitrogen, and then 63.40 g (0.2533 mol) of 4,4'-dihydroxydiphenylsulfone, 70.81 g (0.3803 mol) of 4,4'-dihydroxybiphenyl and 955 g of N-methyl-2-pyrrolidone ("NMP") were added and a homogeneous solution was formed. Next, 92.80 g (0.6714 mol) of potassium carbonate was added and dewatering under reduced pressure was carried out at 135°C-150°C for 4.5 hours while distilling off the NMP. After then adding 200.10 g of 4,4'-dichlorodiphenylsulfone, reaction was conducted at 180°C for 21 hours.

Upon completion of the reaction, the reaction mixture was added dropwise into methanol and the precipitated solid was recovered by filtration. The recovered solid was rinsed with methanol, rinsed with water, rinsed with hot methanol and then dried to obtain 275.55 g of polymer "a". Polymer "a" has the structure represented by the following chemical formula (6).

Polymer "a" had a weight-average molecular weight of 18,000 according to GPC based on polystyrene, and the q/p ratio, determined from the integral in NMR measurement, was q:p = 7:3. The label "random" in formula (6) indicates that the structural unit forming polymer "a" was randomly copolymerized.

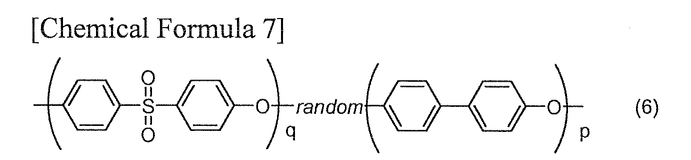

### (Synthesis of polymer "b")

A 2 L separable flask was substituted with nitrogen, and then 80.00 g of polymer "a" and 1014.12 g of nitrobenzene were added and a homogeneous solution was formed. Next, 50.25 g of N-bromosuccinimide was added and the mixture was cooled to 15°C. After then adding 106.42 g of 95% concentrated sulfuric acid dropwise over a period of 40 minutes, reaction was conducted at 15°C for 6 hours. After 6 hours, 450.63 g of 10 wt% aqueous sodium hydroxide and 18.36 g of sodium thiosulfate were added while cooling to 15°C. The solution was then added dropwise into methanol and the precipitated solid was recovered by filtration. The recovered solid was rinsed with methanol and rinsed with water, subsequently re-rinsed with methanol and then dried to obtain 86.38 g of polymer "b". The obtained polymer "b" had an average of 1.8 bromo groups substituted for each oxybiphenylene structure. The molecular weight and bromine content of polymer "b" were analyzed, giving the results shown below.
· Bromine content: 19.5 wt%
· Mn: 7.7 × 10³
· Mw: 1.1 × 10⁴

### (Synthesis of polymer "c")

A 2 L separable flask equipped with a reduced pressure azeotropic distillation apparatus was substituted with nitrogen, and then 80.07 g of polymer "b" and 2200 g of N,N-dimethylformamide were added and a homogeneous solution was formed. The mixture was then dewatered under reduced pressure for 5 hours while distilling off the N,N-dimethylformamide. After 5 hours it was cooled to 50°C, 41.87 g (0.323 mol) of nickel chloride was added, the temperature was increased to 130°C, and 69.67 g (0.419 mol) of triethyl phosphite was added dropwise for reaction at 140°C-145°C for 2 hours. After 2 hours, an additional 17.30 g of (0.1041 mol) triethyl phosphite was added and reaction was conducted at 145°C-150°C for 3 hours. After 3 hours the mixture was cooled to room temperature, a mixture of 1161 g of water and 929 g of ethanol was added dropwise, and the precipitated solid was recovered by filtration. Water was added to the recovered solid, and the mixture was thoroughly pulverized, rinsed with 5 wt% aqueous hydrochloric acid, rinsed with water and then dried to obtain 86.83 g of polymer "c".

### (Synthesis of polymer "d" (phosphorus functional group-containing aromatic polymer compound))

A 5 L separable flask was substituted with nitrogen, and then 75.00 g of polymer "c", 1200 g of 35 wt% hydrochloric acid and 550 g of water were added and the mixture was stirred at 105°C-110°C for 15 hours. After 15 hours, the reaction mixture was cooled to room temperature and 1500 g of water was added dropwise. The solid in the system was then filtered and recovered, and the obtained solid was rinsed with cold water and then with hot water. Upon drying, 72.51 g of the target polymer "d" represented by the following formula (7) (phosphorus functional group-containing aromatic polymer compound) was obtained. The phosphorus content based on elemental analysis of polymer "d" was 5.91%, and the value of x (number of phosphonic acid groups for each biphenyleneoxy group) in formula (7) was 1.6, based on elemental analysis. The label "random" in the formula indicates random copolymerization of the structural unit in parentheses. The phosphorus and bromine contents and molecular weight of the obtained polymer "d" were analyzed, giving the results shown below.
· Phosphorus content: 5.1 wt%
· Bromine content: 0.1 wt%
· Mn: 1.4 × 10⁴
· Mw: 2.2 × 10⁴

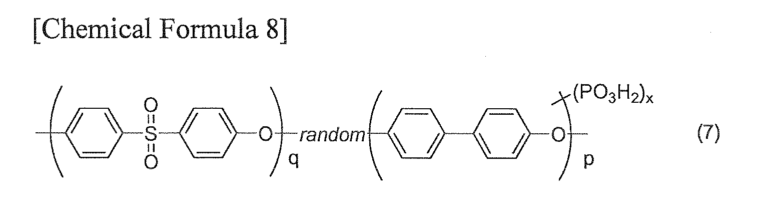

### (Synthesis of polymer "e" (phosphorus functional group-containing aromatic polymer compound))

In a 500 ml flask equipped with a mechanical stirrer there were placed 15.0 g of an alternating copolymer represented by the following formula (9) (product of Aldrich Co., molecular weight (based on polystyrene): Mn = 3.0 × 10⁴, Mw = 6.8 × 10⁴) (37.5 mmol of 4,4'-biphenol-derived units), 35.0 g (197 mmol) of N-bromosuccinic acid imide and 202 g of methylene chloride, and the mixture was stirred under a nitrogen atmosphere. Upon adding 99.6 g of concentrated sulfuric acid dropwise to the suspension over a period of 75 minutes while cooling on ice, a muddy product precipitated.

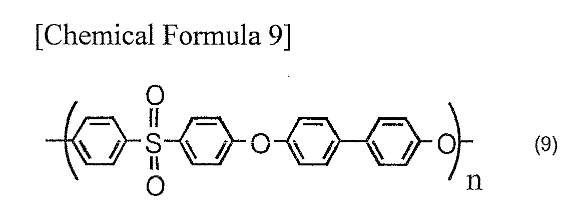

The mixture was stirred for 1 hour and a half while cooling on ice, and upon completion of the dropwise addition the reaction mixture was poured into ice, a small amount of sodium sulfite was added and the mixture was stirred. The reaction mixture was concentrated under reduced pressure with an evaporator and the obtained aqueous slurry was filtered, and then it was repeatedly washed with water while neutralizing and further dried under reduced pressure to obtain a brominated polymer.

A 7 g portion of the brominated polymer obtained in this manner (bromo group content: 26.0 mol) was dissolved in 183 g of N,N-dimethylformamide, 5.11 g (39.4 mmol) of mckel(II) chloride was added and the mixture was stirred under a nitrogen atmosphere. The mixture was heated, and 7.71 g (46.4 mmol) of triethyl phosphite was added dropwise over period of 10 minutes at an oil bath temperature of 130°C. Next, the reaction mixture was heated to reflux temperature over a period of 20 minutes, and after 1 hour and a half, an additional 2.66 g (16.0 mmol) of triethyl phosphite was added dropwise under reflux. After stirring for 2 hours under reflux, the reaction mixture was poured into ice water, filtered, washed with dilute hydrochloric acid, repeatedly washed with water and subjected to neutralization washing with dilute aqueous sodium hydrogencarbonate, in that order, and finally washed with water. The reaction mixture was dried under reduced pressure to obtain 5.63 g of a diethyl phosphonate polymer.

A 10.2 g portion of diethyl phosphonate polymer produced by the method described above was added to 200 ml of aqueous 21% hydrochloric acid and the mixture was stirred for 8 hours while heating to reflux under a nitrogen atmosphere. After allowing the suspension to stand, it was filtered, washed with water and vacuum-dried to obtain a crude product. The obtained crude product was then dissolved in N,N-dimethylformamide, and an excess of 5% hydrochloric acid was added to the resulting solution to reprecipitate the product, which was then filtered, repeatedly washed with water and then dried under reduced pressure to obtain 9.1 g of polymer "e".

As a result of analysis, polymer "e" was found to have a unit structure with the composition represented by formula (10) below (approximately 0.1 Br and approximately 1.3 phosphonic acid group substitutions per 4,4'-biphenol-derived unit).

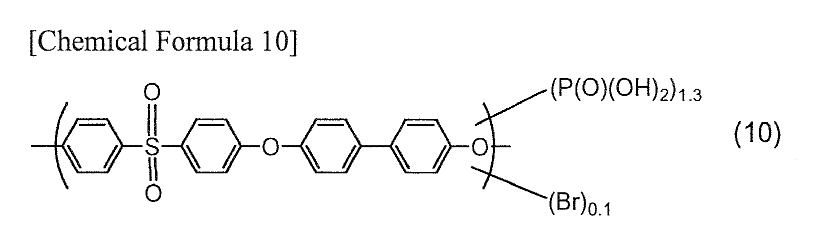

### [Production of aromatic polymer emulsion]

### (Aromatic polymer emulsion A)

The phosphorus functional group-containing aromatic polymer compound obtained in the manner described above (polymer "d") was dissolved in NMP to 1.0 wt% to obtain 100 g of an aromatic polymer compound solution. The 100 g of solution was added dropwise into 900 g of distilled water using a buret at a dropping rate of 3-5 g/min to dilute the solution. The solvent of the diluted phosphorus functional group-containing aromatic polymer compound solution was exchanged by treatment with running water for 72 hours using a dialysis membrane dialyzing cellulose tube (trade name: UC36-32-100 by Sanko Junyaku Co., Ltd., molecular cutoff: 14,000). The solvent-exchanged solution was concentrated to a concentration of 1.4 wt% using an evaporator, to prepare an emulsion of the phosphorus functional group-containing aromatic polymer compound (aromatic polymer emulsion A). The mean particle size of the dispersion in the aromatic polymer emulsion was 269 nm, and the phosphorus functional group-containing aromatic polymer compound was confirmed to be dispersed in the solvent.

### (Aromatic polymer emulsion B)

An emulsion of a phosphorus functional group-containing aromatic polymer compound (aromatic polymer emulsion B) was prepared in the same manner as above, except that the phosphorus functional group-containing aromatic polymer compound obtained as described above (polymer "e") was used instead of polymer "d", dimethyl sulfoxide was used instead of NMP and the solvent-exchanged solution was concentrated to 1.0 wt%. The mean particle size of the dispersion in the aromatic polymer emulsion was 209 nm, and the phosphorus functional group-containing aromatic polymer compound was confirmed to be dispersed in the solvent.

### [Production of polymer electrolyte membrane]

### (Synthesis of dipotassium 4,4'-difluorodiphenylsulfone-3,3'-disulfonate)

After adding 467 g of 4,4'-difluorodiphenylsulfone and 3500 g of 30% fuming sulfuric acid to a stirrer-equipped reactor, the mixture was reacted at 100°C for 5 hours. The obtained reaction mixture was cooled and then added into a large amount of ice water, after which 470 mL of aqueous 50% potassium hydroxide was added dropwise.

The precipitated solid was collected by filtration and washed with ethanol, and then dried. The obtained solid was dissolved in 6.0 L of deionized water, and then aqueous 50% potassium hydroxide was added to adjust it to pH 7.5 and 460 g of potassium chloride was further added. The precipitated solid was collected by filtration and washed with ethanol, and then dried.

The resulting solid was then dissolved in 2.9 L of dimethyl sulfoxide (DMSO), and after removing the insoluble inorganic salt by filtration, the residue was further washed with 300 mL of DMSO. To the obtained filtrate there was added dropwise 6.0 L of an ethyl acetate/ethanol = 24/1 solution, and the precipitated solid was washed with methanol and then dried at 100°C to obtain 482 g of solid dipotassium 4,4'-difluorodiphenylsulfone-3,3'-disulfonate.

### (Synthesis of polymer "f': polymer compound with sulfonic acid groups)

After placing 9.32 parts by weight of dipotassium 4,4'-difluorodiphenylsulfone-3,3'-disulfonate obtained in the manner described above, 4.20 parts by weight of potassium 2,5-dihydroxybenzenesulfonate, 59.6 parts by weight of DMSO and 9.00 parts by weight of toluene under an argon atmosphere in a flask equipped with an azeotropic distillation apparatus, the mixture was stirred at room temperature while bubbling in argon gas for 1 hour.

Next, 2.67 parts by weight of potassium carbonate was added to the obtained mixture and heated stirring was continued at 140°C for azeotropic dehydration. Heating was subsequently continued while distilling off the toluene, to obtain a DMSO solution containing a polymer compound (polymer "f") with sulfonic acid groups. The total heating time was 14 hours. The obtained solution was allowed to cool to room temperature.

### (Synthesis of polymer "g": polymer compound with essentially no ion-exchange groups)

After placing 8.32 parts by weight of 4,4'-difluorodiphenylsulfone, 5.36 parts by weight of 2,6-dihydroxynaphthalene, 30.2 parts by weight of DMSO, 30.2 parts by weight of NMP and 9.81 parts by weight of toluene under an argon atmosphere in a flask equipped with an azeotropic distillation apparatus, the mixture was stirred at room temperature while bubbling in argon gas for 1 hour.

Next, 5.09 parts by weight of potassium carbonate was added to the obtained mixture and heated stirring was continued at 140°C for azeotropic dehydration. Heating was subsequently continued while distilling off the toluene. The total heating time was 5 hours. The obtained solution was allowed to cool to room temperature to obtain an NMP/DMSO mixed solution containing polymer "g" (a polymer compound with essentially no ion-exchange groups).

### (Synthesis of block copolymer)

While stirring the NMP/DMSO mixture of polymer "g" obtained by the method described above, the total amount of the DMSO solution of polymer "f", 80.4 parts by weight of NMP and 45.3 parts by weight of DMSO were added thereto and reaction was conducted at 150°C for 40 hours to obtain a block copolymer.

The obtained reaction mixture was dropped into a large amount of 2N hydrochloric acid and immersed therein for 1 hour. The produced precipitate was then filtered out and re-immersed in 2N hydrochloric acid for 1 hour. The obtained precipitate was filtered and rinsed with water, and then immersed in a large amount of hot water at 95°C for 1 hour. The solution was dried at 80°C for 12 hours to obtain a block copolymer represented by formula (8) below, as a polymer electrolyte for formation of the polymer electrolyte membrane. The ion-exchange capacity of the block copolymer was 1.9 meq/g.

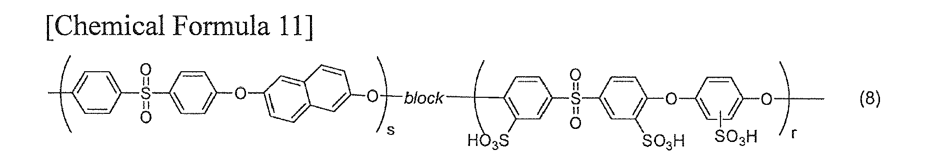

### (Polymer "h")

Polymer "h" represented by chemical formula (11) below was obtained with reference to Example 7 and Example 21 of International Patent Publication No. WO2007/043274. The obtained polymer "h" had a Mw of 3.7 × 10⁵, a Mn of 1.7 × 10⁵ and an IEC of 2.5 meq/g.

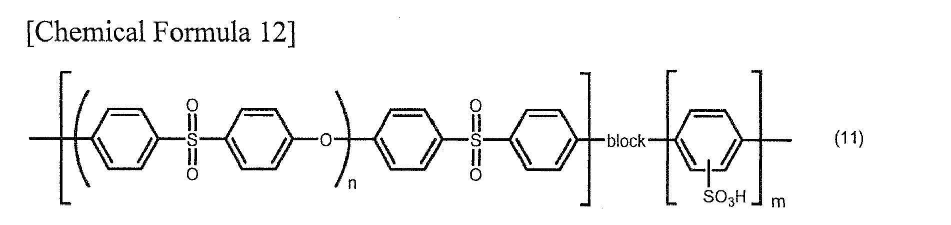

### (Production of polymer electrolyte membrane 1)

A polymer electrolyte represented by formula (8) obtained as described above was dissolved in NMP to a concentration of 13.5 wt%, to prepare a solution of the polymer electrolyte. The polymer electrolyte solution was then dropped onto a glass plate. A wire coater was used to evenly spread the polymer electrolyte solution onto the glass plate. A wire coater with a 0.25 mm clearance was used during this time to control the coating thickness. After coating the polymer electrolyte solution, it was dried at 80°C under ordinary pressure. The obtained membrane was then immersed in 1 mol/L hydrochloric acid and then rinsed with ion-exchanged water, and further dried at ordinary temperature to obtain polymer electrolyte membrane 1 with a thickness of 30 µm.

### (Production of polymer electrolyte membrane 2)

A mixture of polymer "h" and polymer "d" obtained as described above (polymer "h":polymer "d" = 90:10 by weight) was dissolved in DMSO to a concentration of about 10 wt% to prepare a polymer electrolyte solution. The polymer electrolyte solution was then dropped onto a glass plate. A wire coater was used to evenly spread the polymer electrolyte solution onto the glass plate. A wire coater with a 0.5 mm clearance was used during this time to control the coating thickness. After coating the polymer electrolyte solution, it was dried at 80°C under ordinary pressure. The obtained membrane was then immersed in 1 mol/L hydrochloric acid and then rinsed with ion-exchanged water, and further dried at ordinary temperature to obtain polymer electrolyte membrane 2 with a thickness of 30 µm.

### [Example 1: Production and evaluation of fuel cell]

### (Preparation of catalyst ink A)

First, the catalyst inks necessary for production of the membrane-electrode assembly were prepared. Specifically, 1.00 g of platinum-supporting carbon with platinum supported at 51 wt% was loaded into 6 mL of commercially available 5 wt% Nafion solution (polymer electrolyte solution, solvent: mixture of water and lower alcohol), and then 13.2 mL of ethanol was added and 3.77 g of aromatic polymer emulsion A obtained as described above was added. The obtained mixture was subjected to ultrasonic treatment for 1 hour and then stirred for 5 hours with a stirrer to obtain catalyst ink A.

### (Production of membrane-electrode assembly)

Catalyst ink A was coated by spraying onto a 5.2 cm-square region at the center of one side of polymer electrolyte membrane 1 obtained by the production method described above. The distance was 6 cm from the discharge slit to the membrane, and the stage temperature was set to 75°C. After recoating 8 times in the same manner, the coated membrane was allowed to stand for 15 minutes on the stage to remove the solvent and form an anode catalyst layer. The obtained anode catalyst layer was calculated to have a platinum content of 0.6 mg/cm² based on the composition and the coated weight. Next, catalyst ink A was coated onto the side of the polymer electrolyte membrane opposite the anode catalyst layer, to form a cathode catalyst layer containing 0.6 mg/cm² platinum. Membrane-electrode assembly 1 was thus obtained.

### (Production of fuel cell)

A commercially available JARI standard cell was used to produce a fuel cell. Specifically, on both sides of membrane-electrode assembly 1 there were situated a carbon cloth as a gas diffusion layer and a carbon separator with a gas channel groove cut therein, in that order, and then a collector and end plate were situated in that order on the outer sides and clamped with a bolt to assemble a fuel cell with an effective membrane area of 25 cm².

### (Evaluation of fuel cell characteristics)

The obtained fuel cell was kept at 80°C while humidified hydrogen (70 mL/min, back pressure: 0.1 MPaG) and air (174 mL/min, back pressure: 0.05 MPaG) were each introduced into the cells for a load change test with an open circuit and constant current. After operating the fuel cell under these conditions for 230 hours, the membrane-electrode assembly was removed and placed in an ethanol/water mixed solution and subjected to ultrasonic treatment to remove the catalyst layer. The molecular weight of the remaining polymer electrolyte membrane was measured by gel permeation chromatography (GPC). The molecular weight of the polymer electrolyte membrane before and after the load change test and the maintenance factor for the molecular weight of the polymer electrolyte membrane before and after the load change test are shown in Table 1. A higher maintenance factor indicates less deterioration of the polymer electrolyte membrane. The measuring conditions for GPC were as follows.
· Column: 1 TSK gel GMHHHR-M by TOSOH
· Column temperature: 40°C
· Mobile phase solvent: N,N-dimethylformamide (with addition of LiBr to 10 mmol/dm³)
· Solvent flow rate: 0.5 mL/min

### [Example 2]

### (Preparation of catalyst ink B)

After loading 1.00 g of platinum-supporting carbon with platinum supported at 51 wt% into 6 mL of a 5 wt% Nation solution (polymer electrolyte solution, solvent: mixture of water and lower alcohol), 13.2 mL of ethanol was added and 5.00 g of aromatic polymer emulsion B obtained as described above was added. The obtained mixture was subjected to ultrasonic treatment for 1 hour and then stirred for 5 hours with a stirrer to obtain catalyst ink B.

### (Production of membrane-electrode assembly)

Membrane-electrode assembly 2 was fabricated in the same manner as Example 1, except that catalyst ink B was used instead of catalyst ink A. The anode catalyst layer and cathode catalyst layer of the membrane-electrode assembly 2 were layers comprising 0.6 mg/cm² platinum as calculated from the compositions and coated weights.

### (Production of fuel cell)

A fuel cell was fabricated by the same method as Example 1, except for using membrane-electrode assembly 2. The obtained fuel cell was subjected to a load change test and the characteristics of the fuel cell were evaluated, in the same manner as Example 1.

### [Example 3]

### (Production of membrane-electrode assembly)

Membrane-electrode assembly 3 was fabricated by the same method as Example 1, except for using polymer electrolyte membrane 2 instead of polymer electrolyte membrane 1. The anode catalyst layer and cathode catalyst layer of the membrane-electrode assembly 3 were layers comprising 0.6 mg/cm² platinum as calculated from the compositions and coated weights.

### (Production of fuel cell)

A fuel cell was fabricated by the same method as Example 1, except for using membrane-electrode assembly 3. The obtained fuel cell was subjected to a load change test and the characteristics of the fuel cell were evaluated, in the same manner as Example 1.

### [Comparative Example 1]

A fuel cell was produced in the same manner as Example 1, except that aromatic polymer emulsion A was not added during preparation of catalyst ink A. The obtained fuel cell was subjected to a load change test in the same manner as Example 1.

### [Comparative Example 2]

A fuel cell was produced in the same manner as Example 1, except for using a dispersion of 0.05 g of powdered polymer "d" in water instead of aromatic polymer emulsion A during preparation of catalyst ink A, but polymer "d" settled without dispersing in the catalyst ink, and a membrane-electrode assembly and fuel cell could not be obtained.

### [Comparative Example 3]

A fuel cell was produced in the same manner as Example 1, except for using an NMP solution of polymer "d" (1.4 wt%) instead of aromatic polymer emulsion A during preparation of catalyst ink A, but when the catalyst ink was coated onto one side of the polymer electrolyte membrane, the polymer electrolyte membrane underwent considerable deformation making it impossible to coat the other side with the catalyst ink, and a membrane-electrode assembly and fuel cell could not be obtained.

### [Comparative Example 4]

### (Preparation of catalyst ink C)

After loading 1.00 g of platinum-supporting carbon with platinum supported at 51 wt% into 6 mL of a 5 wt% Nafion solution (polymer electrolyte solution, solvent: mixture of water and lower alcohol), there were further added 13.2 mL of ethanol and 0.16 g of aqueous 30 wt% polyvinylphosphonic acid (product of PolyScience). The obtained mixture was subjected to ultrasonic treatment for 1 hour and then stirred for 5 hours with a stirrer to obtain catalyst ink C.

### (Production of membrane-electrode assembly)

Membrane-electrode assembly 4 was fabricated in the same manner as Example 1, except that catalyst ink C was used instead of catalyst ink A. The obtained anode catalyst layer and cathode catalyst layer were layers comprising 0.6 mg/cm² platinum as calculated from the compositions and coated weights.

### (Production of fuel cell)

A fuel cell was fabricated by the same method as Example 1, except for using membrane-electrode assembly 4. The obtained fuel cell was subjected to a load change test in the same manner as Example 1, but because the voltage was low during constant current, it was difficult to continue the load change test.

### [Comparative Example 5]

A membrane-electrode assembly and fuel cell were produced in the same manner as Example 2, except that during preparation of catalyst ink B, the catalyst ink was prepared without addition of aromatic polymer emulsion B, and this catalyst ink was used. The obtained fuel cell was subjected to a load change test in the same manner as Example 1. The results are shown in Table 1.

**[Table 1]**

| Fuel cell | Polymer electrolyte membrane | Mol. wt. | Before load change test | After load change test | Molecular weight maintenance |
|---|---|---|---|---|---|
| Example 1 | Polymer electrolyte membrane 1 | Weight-average mol. wt. | 3.5 × 10⁵ | 3.0 × 10⁵ | 86% |
| | | Number-average mol.wt. | 1.4 × 10⁵ | 1.3 × 10⁵ | 93% |
| Example 2 | Polymer electrolyte membrane 1 | Weight-average mol. wt. | 3.0 × 10⁵ | 2.1 × 10⁵ | 70% |
| | | Number-average mol.wt. | 1.3 × 10⁵ | 9.5 × 10⁴ | 76% |
| Example 3 | Polymer electrolyte membrane 2 | Weight-average mol. wt. | 3.7 × 10⁵ | 3.5 × 10⁵ | 96% |
| | | Number-average mol.wt. | 1.7 × 10⁵ | 1.6 × 10⁵ | 95% |
| Comp. Ex. 1 | Polymer electrolyte membrane 1 | Weight-average mol. wt. | 3.8 × 10⁵ | 1.7 × 10⁵ | 45% |
| | | Number-average mol.wt. | 1.3 × 10⁵ | 7.6 × 10⁴ | 58% |
| Comp. Ex. 5 | Polymer electrolyte membrane 2 | Weight-average mol. wt. | 3.7 × 10⁵ | 3.2 × 10⁵ | 88% |
| | | Number-average mol.wt. | 1.7 × 10⁵ | 1.6 × 10⁵ | 86% |

According to Table 1, deterioration in the polymer electrolyte membrane during the load change test was significantly inhibited in Examples 1-3, wherein the catalyst layers were formed with catalyst inks obtained using aromatic polymer emulsions comprising phosphorus functional group-containing aromatic polymer compounds, compared to Comparative Examples 1 and 5 which did not employ aromatic polymer emulsions. These results confirmed that the fuel cells obtained in Examples 1-3 have high durability.

## Claims

1. A catalyst ink for formation of a fuel cell catalyst layer,
the catalyst ink being **characterized by** comprising a catalyst substance, a solvent and an aromatic polymer compound having a phosphorus atom-containing functional group,
wherein at least the aromatic polymer compound is dispersed in the solvent.

2. A catalyst ink according to claim 1, **characterized by** further comprising a polymer electrolyte with a strongly acidic group.

3. A catalyst ink according to claim 1, **characterized in that** the solvent comprises water.

4. A catalyst ink according to claim 1, **characterized in that** the catalyst substance is platinum and/or a platinum-containing alloy.

5. A catalyst ink according to claim 1, **characterized in that** the aromatic polymer compound has a phosphonic acid group or phosphonic acid ester group as the phosphorus atom-containing functional group.

6. A catalyst ink according to claim 1, **characterized in that** the aromatic polymer compound is a copolymer including a repeated structure represented by the following general formula (1). 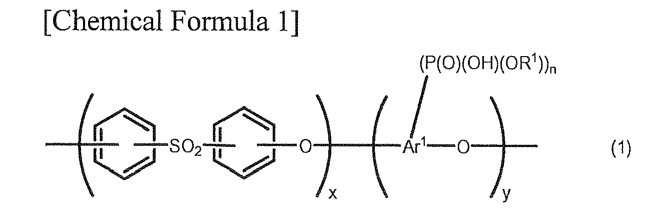 [ In the formula, Ar¹ represents an optionally substituted aromatic group. The letters x and y represent the copolymerization molar ratios of each structural unit (x+y = 1) which are 0.01-0.99, n is an integer from 1 to the number of substitutable sites of Ar¹, and R¹ is hydrogen or an alkyl group.]

7. A method for producing a catalyst ink, **characterized by** including a step of mixing a catalyst substance with a dispersion in which at least a portion of the aromatic polymer compounds with phosphorus atom-containing functional groups are dispersed in a solvent.

8. A method for producing a membrane-electrode assembly, **characterized by** including a step of coating a catalyst ink according to claim 1 onto the surface of a polymer electrolyte membrane to form a catalyst layer.

9. The method for producing a membrane-electrode assembly according to claim 8, **characterized in that** the polymer electrolyte membrane is a hydrocarbon-based polymer electrolyte membrane.

10. A membrane-electrode assembly that can be obtained by the method according to claim 8.

11. A fuel cell comprising a membrane-electrode assembly according to claim 10.
